(19) Europäisches Patentamt

European Patent Office

Office européen des brevets

(11) Veröffentlichungsnummer: **0 363 927 B1**

(12) **EUROPÄISCHE PATENTSCHRIFT**

(45) Veröffentlichungstag der Patentschrift: **30.06.93**

(21) Anmeldenummer: **89118887.2**

(22) Anmeldetag: **11.10.89**

(51) Int. Cl.⁵: **C01B 13/36**, C01G 1/02, C04B 35/00, C01F 1/00

(54) **Verfahren zur Herstellung einer kugelförmige Oxidteilchen enthaltenden Suspension.**

(30) Priorität: **12.10.88 DE 3834774**

(43) Veröffentlichungstag der Anmeldung:
**18.04.90 Patentblatt 90/16**

(45) Bekanntmachung des Hinweises auf die Patenterteilung:
**30.06.93 Patentblatt 93/26**

(84) Benannte Vertragsstaaten:
**AT BE DE FR GB NL**

(56) Entgegenhaltungen:
**DE-B- 1 812 326**
**FR-A- 2 255 098**
**GB-A- 1 472 431**
**GB-A- 2 175 293**
**US-A- 4 474 704**

(73) Patentinhaber: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Rinn, Günter, Dr. Dipl.**
**Dahlienweg 10**
**W-6335 Lahnau 3(DE)**

(74) Vertreter: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 363 927 B1

## Beschreibung

Die vorliegende Erfindung betrifft ein Verfahren zur Herstellung einer Suspension, die kugelförmige Oxidteilchen enthält, und insbesondere ein Verfahren, bei dem man die kugelförmigen Oxidteilchen in einer Wasser-in-Öl-Emulsion mit Hilfe einer als Phasentransferkatalysator einsetzbare Verbindung erzeugt. Die Erfindung betrifft ferner die Verwendung der nach einem derartigen Verfahren erhaltenen Suspensionen zur Herstellung von (keramischen) Oxidpulvern und/oder (keramischen) Formkörpern.

In der Literatur werden verschiedene Verfahren zur Pulverherstellung aus Emulsionen beschrieben. Ein Beispiel hierfür ist das Emulgieren von Metallalkoxiden in damit nicht mischbaren Flüssigkeiten (z.B. Paraffinöl oder Propylencarbonat) mit anschließender Hydrolyse. Nachteilig an diesem Verfahren ist vor allem, daß die erforderlichen Alkoxide relativ teuere Verbindungen darstellen. Weiter ist ein Verfahren bekannt, das umfaßt das Emulgieren von Salzlösungen oder stabilisierten Solen in Kohlenwasserstoffen, gefolgt von z.B. dem Einleiten von Ammoniak zur Ausfällung von Hydroxiden und Eintropfen der resultierenden Mischung in siedende Kohlenwasserstoffe zwecks Verdampfung des Wassers oder Gefriertrocknen. Die nach diesen Verfahren erhältlichen trockenen Pulver enthalten die Anionen in Form von Metall- oder Ammoniumsalzen. Die anschließende thermische Zersetzung führt zum Zerfall der Partikel oder zur Bildung von offenporigen, schwammartigen Strukturen. Hohe Gründichten und ein gutes Sinterverhalten lassen sich dadurch - wenn überhaupt - nur in Einzelfällen erreichen.

Weiter ist auch ein Verfahren bekannt, bei dem man die Extraktion von Säuren oder Anionen von sauren Salzen aus emulgierten wässrigen Phasen dadurch erreicht, daß man der organischen Phase langkettige Amine zusetzt. Ein vollständiger Austausch erfordert aber einen mehrfachen Überschuß an Aminen oder eine stufenweise Extraktion. Eine Spaltung von neutralen Salzen (z.B. Alkali- oder Erdalkalimetallverbindungen) ist mit einem derartigen Verfahren nicht möglich.

Ein Ziel der vorliegenden Erfindung ist deshalb die Schaffung eines Verfahrens zur Herstellung einer kugelförmige Oxidteilchen enthaltenden Suspension, bei dem man eine wässrige Phase, die mindestens ein als Oxid(hydrat) ausfällbares Element in gelöster Form oder in Form eines Sols enthält, in einer organischen Flüssigkeit emulgiert, das insbesondere die folgenden Vorteile aufweisen soll:

- Eine Extraktion von Anionen (Kationen) ist auch aus neutralen Salzlösungen möglich und führt zur Bildung und Präzipitation von Oxid(hydrat)en innerhalb der Emulsionströpfchen.
- Es können billige, anorganische Ausgangsverbindungen eingesetzt werden.
- Das Verfahren führt zu Suspensionen, die zu dichten, kugeligen Pulvern mit homogener chemischer Zusammensetzung sowie gutem Verdichtungs- und Sinterverhalten weiterverarbeitet werden können.
- Die organische Phase und auch die die Ausfällung des Oxid(hydrat)s bewirkende Verbindung können leicht recyclisiert bzw. regeneriert werden.

Diese und andere, weiter unten erläuterte Vorteile werden erfindungsgemäß erzielt durch ein Verfahren zur Herstellung einer kugelförmige Oxidteilchen enthaltenden Suspension, bei dem man eine wässrige Phase, die mindestens ein als Oxid(hydrat) ausfällbares Element in gelöster Form oder in Form eines Sols enthält, in einer organischen Flüssigkeit emulgiert, das dadurch gekennzeichnet ist, daß man in dieser organischen Flüssigkeit vor, während oder nach der Bildung der Emulsion mindestens eine als Phasentransferkatalysator einsetzbare Verbindung löst, die die in den emulgierten Wassertröpfchen vorhandenen Anionen bzw. Kationen durch Hydroxidionen bzw. Protonen ersetzen und dadurch die Ausfällung des Oxid(hydrat)s in den Tröpfchen bewirken kann.

Das erfindungsgemäße Verfahren wird im folgenden näher erläutert.

Die in der organischen Flüssigkeit zu emulgierende wässrige Phase enthält mindestens ein Element, das durch Anheben oder Absenken des pH-Wertes als Oxid(hydrat) ausgefällt werden kann, in gelöster Form oder in Form eines Sols.

Erfindungsgemäß bevorzugte Elemente sind solche, die zur Herstellung von Glas bzw. Keramik geeignet sind. Als Beispiele hierfür wären zu nennen Metalle im allgemeinen, insbesondere Alkalimetalle (z.B. Li, Na, K), Erdalkalimetalle (z.B. Mg, Ca, Sr und Ba), andere Hauptgruppenmetalle, wie z.B. Al, Sn, Pb, Bi, Nebengruppenmetalle, wie z.B. Ti, Zr, V, Mn, Nb, Ta, Cr, Mo, W, Fe, Co, Ni, Cu, Zn, und die Lanthaniden, z.B. Ce und Y. Auch Nichtmetalle, wie z.B. Si, B und P sind erfindungsgemäß geeignet.

Bevorzugte Beispiele für auszufällende Oxide sind unter anderen $ZrO_2$, $TiO_2$, Bleizirkonattitanat (PZT), $BaTiO_3$, $Al_2O_3$, $YBa_2Cu_3O_7$, $ZrSiO_4$, $Al_6Si_2O_{13}$ und $Mg_2Al_4Si_5O_{18}$.

Bevorzugt liegen die obigen Elemente in der emulgierten wässrigen Phase in möglichst hoher Konzentration vor. Je höher die Konzentration, desto eher ist gewährleistet, daß kugelförmige Teilchen gebildet werden.

Hohe Konzentrationen lassen sich z.B. mit wässrigen Salzlösungen, sauer peptisierten wässrigen Solen und Kombinationen davon erreichen.

Wenn Kationen als Oxid(hydrat) ausgefällt werden sollen, so sind unter den Salzlösungen diejenigen bevorzugt, die als Anionen solche aufweisen, die sich thermisch leicht zersetzen lassen, insbesondere Nitrate, Sulfate und Anionen organischer Säuren, wie Acetate und Formiate. Das Nitration wird besonders bevorzugt, da es eine hohe Affinität zu Anionenaustauscherharzen aufweist, was ein Vorteil ist, wenn zur Regenerierung der als Phasentransferkatalysator wirkenden Verbindung ein Anionenaustauscherharz eingesetzt wird.

Säuren, die in die oben genannten Anionen dissoziieren, sind dann bevorzugt, wenn ein Sol sauer peptisiert werden soll. Peptisierte Sole sind insbesondere im Falle der Regenerierung der als Phasentransferkatalysator wirkenden Verbindung mit Ionenaustauschern den wässrigen Salzlösungen vorzuziehen, da die letzteren sehr viele auszutauschende Anionen enthalten und dadurch zu einer schnelleren Erschöpfung des Austauschermediums führen.

Wässrige Salzlösungen und Sole lassen sich nach vielen dem Fachmann geläufigen Verfahren herstellen. Im einfachsten Fall kann das entsprechende Salz einfach in Wasser aufgelöst werden. Andere Möglichkeiten sind z.B. die Dialyse von Salzlösungen, die Hydrolyse von Alkoholaten (z.B. im Falle von Zirkonium), die Peptisierung von frisch gefällten Hydroxiden (z.B. im Falle von Aluminium), das Mischen eines Sols mit einer Salzlösung oder einem peptisierten Hydroxid usw. Konkrete Beispiele hierfür werden weiter unten gegeben.

Zwecks Bildung einer Wasser-in-Öl-Emulsion wird die wässrige Phase in einer organischen Flüssigkeit emulgiert. Zweckmäßigerweise erfolgt das Emulgieren in Gegenwart eines Emulgators, vorzugsweise eines nicht-ionischen Emulgators.

Als organische Flüssigkeit eignen sich prinzipiell alle unter den Reaktionsbedingungen inerten, mit Wasser praktisch nicht-mischbaren organischen Lösungsmittel. Beispiele hierfür sind (gegebenenfalls halogenierte, insbesondere fluorierte oder chlorierte) aliphatische und aromatische Kohlenwasserstoffe (z.B. Hexan, Heptan, Decan, Benzinfraktionen, Kerosin, Mineralöl, Benzol, Toluol, Xylol), höhere Alkohole (z.B. Alkohole mit 6 bis 8 Kohlenstoffatomen), Ether (wie z.B. Tetrahydrofuran, Dioxan, von Polyethylenglykol und Polypropylenglykol abgeleitete Ether), Ester und Ketone.

Erfindungsgemäß bevorzugt werden als organische Flüssigkeit Benzinfraktionen (Siedebereich z.B. 50 bis 70 °C oder 100 bis 140 °C), Hexan, Heptan, Toluol, die Xylole, und halogenierte Kohlenwasserstoffe, wie z.B. Chloroform und Chlorbenzol. Auf Jeden Fall sollte der Siedepunkt des Lösungsmittels unter seiner Zersetzungstemperatur liegen. Da das organische Lösungsmittel später vorzugsweise quantitativ entfernt wird, sollte es keinen zu hohen Siedepunkt aufweisen, insbesondere keinen Siedepunkt, der wesentlich über 180 °C liegt. Andererseits sollte der Siedepunkt auch nicht zu niedrig, d.h. nicht wesentlich unter 50 °C sein, da sich sonst die später gegebenenfalls vorzunehmende Abtrennung des Wassers schwierig gestaltet.

Das beste Lösungsmittel für ein vorgegebenes System hängt von vielen Faktoren, z.B. der Natur des eingesetzten Emulgators, der als Phasentransferkatalysator wirkenden Verbindung und der Art des auszufällenden Oxid(hydrat)s ab, und kann durch einfache Routineversuche bestimmt werden.

Als Emulgator können nicht-ionische, aber auch kationische und anionische Emulgatoren Verwendung finden. Nichtionische Emulgatoren werden bevorzugt, da sie zum einen das Arbeiten in einem weiten pH-Bereich ermöglichen und andererseits keine anorganischen Verunreinigungen in das System einführen.

Generell sollte der Emulgator zur Bildung einer Wasserin-Öl-Emulsion fähig sein. Derartige Emulgatoren weisen im allgemeinen einen HLB-Wert von unter 7 auf, in Einzelfällen können aber auch Emulgatoren mit HLB-Werten von 11 oder darüber noch zu Wasser-in-Öl-Emulsionen führen. Die Art der Emulsion hängt nämlich nicht nur vom eingesetzten Emulgator ab, sondern auch von der als organische Phase verwendeten Flüssigkeit, dem Volumenverhältnis der Phasen usw. Eine Übersicht über die Zusammenhänge bei der Bildung von Emulsionen und die Einflüsse verschiedener Faktoren auf die Eigenschaften von in solchen Emulsionen gebildeten Oxidteilchen gibt M. Akinc und K. Richardson, "Preparation of ceramic powders from emulsions", Mat. Res. Soc. Symp. Proc., Bd. 73, 1986, Materials Research Society. Auf die dort gemachten Ausführungen wird Bezug genommen.

Konkrete Beispiele für erfindungsgemäß besonders geeignete nicht-ionische Emulgatoren sind Sorbitanester von Laurin-, Palmitin-, Stearin- und Ölsäure (z.B. die unter dem Warenzeichen Span® vertriebenen), Polyoxyethylenderivate dieser Ester (z.B. die unter dem Warenzeichen Tween® vertriebenen) und Alkyl(phenol)polyglykolether und Fettsäurepolyglykolester (z.B. die unter dem Warenzeichen Emulsogen® vertriebenen). Als weitere Beispiele können Emulgatoren vom Arlacel®-, Pluronic®-, Emulan®-, Malophen®- und Malovet®-Typ genannt werden. Selbstverständlich stellen die soeben genannten Emulgatoren nur eine kleine Auswahl aus den erfindungsgemäß einsetzbaren W/O-Emulgatoren dar.

Beispiele für anionische W/O-Emulgatoren sind Salze höhermolekularer Fettsäuren mit zwei- und dreiwertigen Kationen, z.B. Calcium, Magnesium, Aluminium und Lithium. Kationische Emulgatoren sind z.B. Fettamine und quaternäre Ammoniumverbindungen. Schließlich können auch noch ampholytische Emulgatoren eingesetzt werden, wie z.B. langkettige substituierte Aminosäuren und Betaine.

Der Emulgator wird bevorzugt in einer Menge von 0,1 bis 25 Gewichtsprozent, vorzugsweise 1 bis 20 Gewichtsprozent, bezogen auf die organische Phase, eingesetzt. In Einzelfällen können aber auch geringere bzw. höhere als die soeben genannten Konzentrationen von Vorteil sein.

Der Anteil der wässrigen Phase an der Emulsion beträgt erfindungsgemäß vorzugsweise 5 bis 50, insbesondere 15 bis 45 und besonders bevorzugt 20 bis 40 Volumen-Prozent. Während es keinen praktischen Minimalwert für den Volumenanteil der wässrigen Phase gibt, wird es bei einem Volumenanteil der wässrigen Phase von 50% oder darüber im allgemeinen sehr schwierig, eine einigermaßen stabile W/O-Emulsion zu erhalten.

Zur Herstellung der Emulsion können dem Fachmann bekannte Techniken eingesetzt werden. Zum Beispiel kann man den Emulgator zunächst in der organischen Flüssigkeit lösen und dann die wässrige Phase auf einmal oder schrittweise z.B. unter Rühren zugeben. Die Herstellung der Emulsion erfolgt vorzugsweise bei Raumtemperatur oder leicht erhöhten Temperaturen (z.B. 40 bis 50 °C). Es können z.B. Ultraschallgeräte oder Rotor-Stator-Systeme mit hoher Schergeschwindigkeit verwendet werden. Spezielle Emulgatoren und eine geeignete apparative Ausstattung (z.B. Hochdruck-Homogenisator) ermöglichen die Herstellung von Emulsionen mit Tröpfchengrößenverteilungen bis in den Sub-$\mu$m-Bereich und einer scharfen oberen Grenze. Die Größe der im weiteren Verlauf entstehenden Partikel wird durch die Tröpfchengröße der Emulsion und dem Feststoffgehalt der wässrigen Lösung bestimmt. Je größer die emulgierten Wassertröpfchen, desto größer werden später auch die Oxidteilchen in der Suspension. Im allgemeinen führen Tröpfchengrößen über 20 $\mu$m zur (im allgemeinen nicht erwünschten) Bildung von Hohlkugeln. Sollen die erfindungsgemäß hergestellten Suspensionen zu keramischen Materialien weiterverarbeitet werden, so liegt die Tröpfchengröße vorzugsweise bei 5 $\mu$m oder darunter, was einer Endgröße (nach dem Calcinieren) von 1 bis 2 $\mu$m entspricht. Die bevorzugte Untergrenze für die Tröpfchengröße hängt von der gewünschten Größe der Oxidteilchen ab.

Zur Bildung der W/O-Emulsion kann z.B. auch so vorgegangen werden, daß man eine O/W-Emulsion durch Zugabe von organischer Flüssigkeit in eine W/O-Emulsion umwandelt.

Einer der wichtigsten Aspekte des erfindungsgemäßen Verfahrens ist die Zugabe einer als Phasentransferkatalysator wirkenden Verbindung zur organischen Phase, die die Fähigkeit hat, die in den emulgierten Wassertröpfchen vorhandenen Anionen (oder Kationen) durch Hydroxidionen (oder Protonen) zuersetzen und so die Ausfällung des Oxid(hydrat)s in den Tröpfchen zu bewirken.

Gemäß einer besonders bevorzugten Ausführungsform der vorliegenden Erfindung werden in den Tröpfchen neutrale oder basische (Metall-)oxide ausgefällt, so daß die als Phasentransferkatalysator einsetzbare Verbindung die in den Wassertröpfchen vorhandenen Anionen (z.B. Nitrat, Sulfat, Formiat, Acetat, etc.) durch Hydroxidionen ersetzen muß. Im folgenden wird das erfindungsgemäße Verfahren unter Bezugnahme auf diese bevorzugte Ausführungsform erläutert. Die Ausfällung von sauren Oxiden erfolgt analog.

Die als Phasentransferkatalysator einsetzbare Verbindung kann z.B. eine quaternäre Ammonium-, Phosphonium- oder andere Onium-Verbindung sein. Auch Kronenether und Kryptanden sind erfindungsgemäß u.a. geeignet.

Wegen ihrer leichten Zugänglichkeit und ihres Preises werden Ammoniumverbindungen bevorzugt. Besonders bevorzugte Beispiele sind die quaternären Ammoniumsalze, insbesondere Tetraalkylammoniumchloride, -bromide und -jodide. In diesen Tetraalkylammoniumsalzen weisen die Alkylreste, die gleich oder verschieden sein können, vorzugsweise 1 bis 20 Kohlenstoffatome auf. Die Gesamtkohlenstoffzahl sollte so hoch sein, daß sich die Salze in Wasser praktisch nicht mehr lösen und liegt deshalb bevorzugt über 15, insbesondere über 20. Als besonders geeignete Vertreter haben sich Tetraalkylammoniumsalze erwiesen, die über zwei bis drei lange Reste (z.B. mit 8 bis 20 Kohlenstoffatomen) und einen oder zwei kurze Alkylgruppen (z.B. ein oder zwei Methyl- oder Ethylgruppen) verfügen. Ein Beispiel hierfür ist die Didodecyldimethylammoniumbromid. Eine weitere bevorzugte Klasse von Tetraalkylammoniumsalzen sind diejenigen, die über einen langen Kohlenwasserstoffrest (z.B. mit 16 oder mehr Kohlenstoffatomen) und drei kurze Alkylgruppen (z.B. Methyl- oder Ethylgruppen) verfügen. Ein Beispiel hierfür ist Octadecyltrimethylammoniumbromid. Allgemein kann gesagt werden, daß Tetraalkylammoniumsalze mit voneinander verschiedenen Resten in der Regel vorteilhafter sind als solche mit vier identischen Resten. Die Alkylreste können auch substituiert sein, z.B. durch eine Phenylgruppe (z.B. Benzylammoniumsalze). Bei der Wahl des Tetraalkylammoniumsalzes muß auch bedacht werden, daß Salze mit langen Alkylketten als Tenside wirken können. Demgemäß muß durch einfache Routineversuche für jeden Einzelfall festgestellt werden, welcher Phasentransferkatalysator sich am besten eignet.

Die als Phasentransferkatalysator einsetzbare Verbindung kann in der organischen Flüssigkeit oder aber auch in der fertigen Emulsion gelöst werden. Dies kann bei Raumtemperatur oder leicht erhöhter Temperatur vorzugsweise unter Rühren geschehen. Wenn es möglich ist, die als Phasentransferkatalysator wirkende Verbindung bereits vor dem Emulgiervorgang in der organischen Phase zu lösen, so hat dies den Vorteil, daß die Wiederverwendung der organischen Phase vereinfacht wird.

Um die Auflösung des Phasentransferkatalysators in der organischen Flüssigkeit oder in der organischen Phase der Emulsion zu erleichtern, wird es bevorzugt, ihn in einem möglichst kleinen Volumen eines guten Lösungsmittels, insbesondere eines Alkohols mit 4 bis 8 Kchlenstoffatomen, vorzugsweise Hexanol, Heptanol oder Octanol zu lösen. Das Lösungsmittel für den Phasentransferkatalysator sollte praktisch wasserunlöslich sein, damit in der Emulsion eine saubere Phasentrennung sichergestellt wird.

Die als Phasentransferkatalysator einsetzbare Verbindung, z.B. das Tetraalkylammoniumsalz, kann bereits in der Hydroxidform und auch in stöchiometrischen Mengen, bezogen auf die in der wässrigen Phase vorhandenen auszutauschenden Anionen, eingesetzt werden. Bevorzugt wird die als Phasentransferkatalysator wirkende Verbindung jedoch in unterstöchiometrischen Mengen, insbesondere 1 bis 20%, bevorzugt 5 bis 10%, bezogen auf die in der wässrigen Phase vorliegenden auszutauschenden Ionen (Anionen), verwendet. In diesem Fall sollte der Phasentransferkatalysator selbstverständlich absatzweise oder kontinuierlich regeneriert werden. Gemäß einer besonders bevorzugten Ausführungsform der vorliegenden Erfindung erfolgen Austausch der Anionen und Regenerierung des Phasentransferkatalysators gleichzeitig. Wenn der Phasentransferkatalysator gleich zu Beginn in der Hydroxidform vorliegt, hat dies den zusätzlichen Vorteil, daß der erste Austausch spontan erfolgt und sich sofort an der Oberfläche der Wassertröpfchen Hydroxide bilden, was die Emulsion wesentlich stabilisiert, so daß diese Vorgehensweise besonders bei wenig stabilen Emulsionen zu empfehlen ist.

Als Regeneriermittel für die als Phasentransferkatalysator wirkende Verbindung werden vorzugsweise Ionenaustauscherharze eingesetzt. Soll der Phasentransferkatalysator Anionen gegen Hydroxidionen austauschen, so wird ein anionisches Ionenaustauscherharz verwendet, während bei einer Verbindung, die Kationen gegen Protonen austauschen muß, das Regeneriermittel ein kationisches Ionenaustauscherharz ist.

Erfindungsgemäß geeignete Ionenaustauscherharze sind die gebräuchlichen und im Handel erhältlichen. Diese werden unter Warenzeichen wie Permutit, Lewatit, Amberlite, Amberlyst, Dowex, Wofatit usw. angeboten. Auch anorganische Ionenaustauscher, wie z.B. Zeolithe, Montmorillonite, Attapulgite, Bentonite und Aluminiumsilicate, können Verwendung finden.

Die Regenerierung der als Phasentransferkatalysator wirkenden Verbindung kann auf verschiedene Art und Weise durchgeführt werden. Zum Beispiel kann man die Emulsion zusammen mit dem Phasentransferkatalysator durch eine Ionenaustauschersäule leiten, wobei man die Verweilzeit der Emulsion auf der Säule so bemißt, daß Austausch und Regenerierung des Phasentransferkatalysators vollständig sind. Zu diesem Zweck kann man die Emulsion auch mehrmals über die Säule leiten. Wie bereits oben erwähnt ist es aber auch möglich, den Phasentransferkatalysator in stöchiometrischen Mengen einzusetzen, ihn nach erfolgtem Austausch abzutrennen, zu regenerieren und erneut einzusetzen.

Bei der Auswahl von Phasentransferkatalysator und Regeneriermittel muß natürlich bedacht werden, daß z.B. nur ein Anionenaustauscherharz, das stärker basisch ist als die Hydroxidform des Tetraalkylammoniumsalzes, das letztere regenerieren kann. Ebenso sollte der Phasentransferkatalysator im erfindungsgemäßen Verfahren in seiner Hydroxidform stärker basisch sein als das auszufällende Oxid(hydrat). Analoges gilt im Fall eines Kationenaustausches, bei dem kationische Ionenaustauscher als Regeneriermittel und z.B. Salze von langkettigen organischen Säuren (z.B. Fettsäuren und die analogen Sulfonsäuren) als Phasentransferkatalysator eingesetzt werden können.

Leitet man die Emulsion über eine Säule oder regeneriert man über einer Ionenaustauscher-Membran, so kann mit Hilfe von Indikatorstäbchen (pH- oder ionenselektive Indikatorstäbchen) leicht festgestellt werden, ob Austausch bzw. Regenerierung bereits vollständig sind. v

Nach der (vollständigen) Ausfällung des gewünschten Oxid(hydrat)s liegt die ursprünglich eingesetzte Emulsion in Form einer Suspension von kugelförmigen Oxidteilchen vor. Aus dieser Suspension wird das Wasser vorzugsweise abgetrennt, um die Oxidteilchen zu verdichten und zu stabilisieren. Zu diesem Zweck wird das Wasser z.B. azeotrop (vorzugsweise bei Normaldruck) abdestilliert. Geringe Mengen von in der wässrigen Phase gelösten Hydroxiden fallen durch den Wasserentzug noch aus. Azeotrope Gemische mit 20 bis 40% Wasser erreicht man z.B. durch den Zusatz von wenig (z.B. 5 Volumenprozent der Emulsion) (n-)Butanol und/oder (n-)Pentanol, also Alkoholen, die noch in einem gewissen Maße mit $H_2O$ mischbar sind, zu Wasser-Petroleumbenzin-Gemischen. Die Abtrennung des Wassers aus dem Destillat kann durch eine Wasserfalle nach Dean-Stark erfolgen. Die organische Phase kann gegebenenfalls zurückgeführt werden.

Die so hergestellten Oxidteilchen können nun z.B. durch Filtrieren oder Zentrifugieren, Nachwaschen und Trocknen oder Redispergieren und Sprühtrocknen isoliert werden. Unter geeigneten Bedingungen erhält man so agglomeratfreie Pulver mit kugeligen, relativ stark verdichteten Partikeln.

Diese Pulver können in üblicher Weise weiterverarbeitet werden, indem man sie z.B. calciniert und anschließend gegebenenfalls durch Pressen und Sintern in Formkörper umwandelt. Die erhaltene Pulversuspension kann aber auch direkt oder nach der Wasserentfernung weiterverarbeitet werden, indem man sie z.B. einer Filterpresse zuführt und dort zu Formkörpern verarbeitet.

Die erfindungsgemäß erhältlichen Oxid(hydrat)-Partikel, denen das Wasser in geeigneter Weise entzogen wurde, zeigen beim Calcinieren in der Regel einen sehr geringen Glühverlust( ca. 10 bis 20%.). Die kristallinen Phasen entstehen im Vergleich zu mixed-oxide-Verfahren bei wesentlich niedrigeren Temperaturen. Die Verdichtung der einzelnen Partikel erfolgt dabei ohne die Bildung harter Agglomerate durch beginnende Sintermechanismen. Diese Pulver können anschließend ohne Mahlprozesse und damit ohne Verunreinigungen durch Abrieb der Weiterverarbeitung zugeführt werden.

Preßversuche mit verschiedenen Pulvern ergaben ohne den Zusatz von Preßhilfsmitteln Preßkörper mit 55 bis 65% der theoretischen Dichte. Diese Körper konnten anschließend drucklos nahezu bis zur theoretischen Dichte gesintert werden.

Zusammenfassend weist das erfindungsgemäße Verfahren unter anderem die folgenden wesentlichen Vorteile auf:

- Eine Extraktion von (An)ionen ist auch aus neutralen Salzlösungen möglich und führt zur Bildung und Präzipitation von Hydroxiden innerhalb der Emulsionströpfchen.
- Geringe Konzentrationen der als Phasentransferkatalysator wirkenden Verbindung sind ausreichend, um einen vollständigen Austausch zu erreichen. Diese Verbindungen können ständig an einem Austauschermedium regeneriert werden.
- Mögliche Austauschermedien sind Ionenaustauscherharze, aber z.B. auch wässrige oder feste Basen (z.B. NaOH-Plätzchen), die durch Diaphragmen oder Ionenaustauscher-Membranen von der Emulsion getrennt werden können.
- Die Austauschermedien sind entweder sehr preisgünstig oder können einfach regeneriert werden; die organischen Lösungsmittel können wiederverwendet werden.
- Es können billige, anorganische Ausgangsverbindungen eingesetzt werden.

- Das erfindungsgemäße Verfahren liefert dichte, kugelige Pulver mit homogener chemischer Zusammensetzung sowie gutem Verdichtungs- und Sinterverhalten.
- Das Verfahren ist bevorzugt auf den Anionenaustausch, in gleicher Weise aber auch auf den Kationenaustausch zur Herstellung von Pulvern aus basisch stabilisierten Solen übertragbar (z.B. $SiO_2$-Pulvern aus Wasserglas oder Kieselsolen).

Das erfindungsgemäße Verfahren eignet sich demgemäß insbesondere zur Herstellung von Pulvern mit kugelförmigen Partikeln, unterschiedlicher Zusammensetzung und Anwendung:

- Struktur- oder Funktionskeramiken mit homogener chemischer Zusammensetzung (auch Dotierungen), gutem Verdichtungsverhalten und niedrigem Phasenbildungs-und Sintertemperaturen;
- Glaspulver und Gläser mit Zusammensetzungen, die über Schmelzen nicht zugänglich sind, da z.B. die Schmelztemperatur zu hoch und/oder die Neigung zur Rekristallisation zu groß ist;
- Composite zwischen Keramiken, Gläsern, Metallen und organischen Komponenten.

Die folgenden Beispiele erläutern das erfindungsgemäße Verfahren ohne es zu beschränken.

**Beispiel 1**

Herstellung der wässrigen Lösungen und/oder Sole

a)    $ZrO_2$-$Y_2O_3$

109,2 g $Zr(OC_3H_7)_4$ (75%), entsprechend 0,25 Mol, werden in 75 ml Ethanol gelöst und mit 22 ml konz. $HNO_3$ (65%) und 25 ml $H_2O$ versetzt. Zweifaches Einrotieren bei 60°C und Wiederaufnehmen mit destilliertem Wasser ergibt ein klares, wässriges Sol. 5,76 g $Y(NO_3)_3$ x $6H_2O$ werden in 20 ml $H_2O$ gelöst und zu dem $ZrO_2$-Sol gegeben. Das Gesamtvolumen des Sols wird anschließend auf 100-ml eingestellt.

b)    $ZrO_2$-$Al_2O_3$

Zur Herstellung des $ZrO_2$-Sols wird zunächst wie unter a) vorgegangen. Anschließend wird zu diesem Sol ein vollständig peptisierbares Aluminiumoxidhydroxid (Disperal, Fa. Condea) gegeben. Das Mischungsverhältnis der beiden Komponenten ist dabei beliebig. Zum Beispiel werden zur Herstellung von 20% $Al_2O_3$ und 80% $ZrO_2$ 9,1 g AlOOH dem oben beschriebenen 0,25 molaren $ZrO_2$-Ansatz zugegeben.

c)    $ZrSiO_4$

Zunächst wird wie unter a) vorgegangen. Anschließend werden zu dem $ZrO_2$-Sol 15 g hochdisperses $SiO_2$ (Aerosil, Fa. Degussa) gegeben.

d)      $Pb(Zr,Ti)O_3$

23,0 g $Zr(OC_3H_7)_4$ (74,1%) und 11,75 g Ti-$(OC_2H_5)_4$ (93,2%) werden in 45 ml Ethanol gelöst und mit 7 ml $HNO_3$ (65%) und 10 ml $H_2O$ versetzt. Zweifaches Einrotieren bei 60°C und Wiederaufnehmen mit destilliertem Wasser ergibt ein klares, wässriges Sol. 33,12 g $Pb(NO_3)_2$ werden in 85 ml $H_2O$ gelöst, mit dem Sol vermischt und das Gesamtvolumen auf 150 ml eingestellt. Die stöchiometrische Zusammensetzung dieser Mischung entspricht dem Reaktionsprodukt $Pb(Zr_{0,52}Ti_{0,48})O_3$.

e)      $BaTiO_3$

12,24 g $Ti(OC_2H_5)_4$ (93,2%) werden in 15 ml Ethanol gelöst und mit 3,5 ml $HNO_3$ (65%) und 5 ml $H_2O$ versetzt. Zweifaches Einrotieren bei 60°C und Wiederaufnehmen mit destilliertem Wasser ergibt ein leicht getrübtes, wässriges Sol. 13,07 g $Ba(NO_3)_2$ werden in 125 ml $H_2O$ gelöst, mit dem Sol gemischt und das Gesamtvolumen auf 150 ml eingestellt.

f)      $YBa_2Cu_3O_{7-x}$

3,83 g $Y(NO_3)_3 \cdot 6\,H_2O$, 5,23 g $Ba(NO_3)_2$ und 7,25 g $Cu(NO_3)_2 \cdot 3\,H_2O$ werden in 120 ml $H_2O$ in der Hitze gelöst und die Gesamtlösung wird nach dem Abkühlen auf 150 ml eingestellt.

## Beispiel 2

Herstellung der Emulsionen

Die Weiterverarbeitung der wässrigen Lösungen ist für alle unter Beispiel 1 beschriebenen Stoffsysteme identisch.

Je 100 ml zu emulgierender wässriger Phase wird 1 g Emulgator (Emulsogen® OG, Fa. Hoechst) in 250 ml Petroleumbenzin (Siedebereich 50 bis 70°C) gelöst und die wässrige und organische Phase zusammengegeben. Die Emulsion wird anschließend mit einem Ultraturrax (Fa. IKA) in einer Durchflußzelle hergestellt.

## Beispiel 3

Ionenaustausch

Vor Beginn des Ionenaustausches werden 1 Molprozent Didodecyldimethylammoniumbromid, bezogen auf die Menge auszutauschender Anionen, in n-Octanol mit einer Konzentration von 1 g/5 ml gelöst und zu der Emulsion gegeben. Der Austausch erfolgt anschließend in einer mit Dowex 1 x 8 (Fa. Dow Chemical), einem stark basischen Ionenaustauscher, gefüllten Säule. Die Menge des Ionenaustauschers ergibt sich aus der Austauschkapazität, der Menge auszutauschender Anionen und einer ausreichenden Sicherheitsreserve, d.h. für 250 mMol auszutauschender Anionen werden z.B. 500 g Dowex eingesetzt. Die Kontrolle des Ionenaustausches erfolgt mit pH- und Nitrat-Indikatorstäbchen.

## Beispiel 4

Trocknung

Vor dem azeotropen Abdestillieren des Wassers werden 10 Volumenprozent n-Butanol, bezogen auf die Gesamtmenge an Wasser, zu der Emulsion gegeben; damit steigt die Konzentration von Wasser in dem azeotropen Gemisch von ca. 5% auf 20%. Nach der Destillation werden die entstandenen Partikel abfiltriert, in Petroleumbenzin redispergiert, erneut filtriert und getrocknet.

## Beispiel 5

Calcinierung

Das Calcinieren der Pulver führt im Temperaturbereich bis 650°C zur Zersetzung von Spuren nicht ausgetauschter Nitrate, zu Verdampfung oder Pyrolyse und Ausbrennen von adsorbierten organischen Bestandteilen (z.B. Emulgatoren) und der Bildung der Oxide aus den Hydroxiden (Oxidhydraten).

Anschließend sind, in Abhängigkeit vom Stoffsystem, zum Teil noch höhere Temperaturen zum Verdichten der einzelnen Partikel und zur Bildung der gewünschten Phasen erforderlich.

Die Weiterverarbeitung der Pulver erfolgt mit üblichen keramischen Technologien.

## Patentansprüche

1.      Verfahren zur Herstellung einer kugelförmige Oxidteilchen enthaltenden Suspension, bei dem man eine wässrige Phase, die mindestens ein als Oxid(hydrat) ausfällbares Element in gelöster Form oder in Form eines Sols enthält, in einer organischen Flüssigkeit emulgiert, dadurch **gekennzeichnet,** daß man in dieser organischen Flüssigkeit vor, während oder nach der Bildung der Emulsion mindestens eine als Phasentransferkatalysator einsetzbare Verbindung löst, die die in den emulgierten Wassertröpfchen vorhandenen Anionen bzw. Kationen durch Hydroxidionen bzw. Protonen ersetzen und dadurch die Ausfällung des Oxids in den Tröpfchen bewirken kann.

2. Verfahren nach Anspruch 1, dadurch gekennzeichnet, daß zur Bildung der Emulsion ein Emulgator, vorzugsweise ein nicht-ionischer Emulgator, eingesetzt wird.

3. Verfahren nach einem der Ansprüche 1 und 2, dadurch gekennzeichnet, daß es sich bei dem auszufällenden Oxid(hydrat) um ein neutrales oder basisches Oxid handelt und die als Phasentransferkatalysator einsetzbare Verbindung Hydroxidionen in die wässrige Phase einschleust.

4. Verfahren nach einem der Ansprüche 1 und 2, dadurch gekennzeichnet, daß es sich bei dem als Oxid(hydrat) auszufällenden Element um mindestens eines aus der Gruppe der Erdalkalimetalle, insbesondere Barium, der Lanthaniden, insbesondere Yttrium, der Nebengruppenmetalle, insbesondere Titan, Zirkonium, Niob, Tantal und Wolfram, und/oder um Aluminium, Silicium, Zinn und Blei handelt.

5. Verfahren nach einem der Ansprüche 1 bis 4, dadurch gekennzeichnet, daß als als Phasentransferkatalysator einsetzbare Verbindung ein Ammoniumsalz, insbesondere ein Tetraalkyl- oder Tetraaralkylammoniumhalogenid, eingesetzt wird.

6. Verfahren nach einem der Ansprüche 1 bis 5, dadurch gekennzeichnet, daß als organische Flüssigkeit ein gegebenenfalls halogenierter aliphatischer oder aromatischer Kohlenwasserstoff oder eine Mischung davon eingesetzt wird.

7. Verfahren nach einem der Ansprüche 1 bis 6, dadurch gekennzeichnet, daß der Volumenanteil der Wässrigen Phase in der Emulsion 15 bis 45% beträgt.

8. Verfahren nach einem der Ansprüche 1 bis 7, dadurch gekennzeichnet, daß man die Wässrige Phase vor Beginn der Ausfällung auf eine durchschnittliche Tröpfchengröße im Bereich von 0,1 bis 5 μm einstellt.

9. Verfahren nach einem der Ansprüche 1 bis 8, dadurch gekennzeichnet, daß man eine unterstöchiometrische Menge der als Phasentransferkatalysator einsetzbaren Verbindung einsetzt und diese Verbindung kontinuierlich oder absatzweise regeneriert.

10. Verfahren nach Anspruch 9, dadurch gekennzeichnet, daß man zur Regenerierung der als Phasentransferkatalysator einsetzbaren Verbindung einen Ionenaustauscher verwendet.

11. Verfahren nach einem der Ansprüche 9 und 10, dadurch gekennzeichnet, daß man die Ausfällung des Oxid(hydrat)s und die Regenerierung der als Phasentransferkatalysator einsetzbaren Verbindung gleichzeitig durchführt.

12. Verwendung der nach dem Verfahren gemäß einem der Ansprüche 1 bis 11 erhaltenen Suspension zur Herstellung von (keramischen) Oxidpulvern und/oder von Formkörpern, insbesondere keramischen Körpern.

**Claims**

1. A process for the preparation of a suspension which contains sphere-shaped oxide particles by emulsifying in an organic liquid an aqueous phase containing in dissolved form or in the form of a sol at least one element which can be precipitated as an oxide (hydrate), characterized by dissolving in said organic liquid before, during or after the formation of the emulsion at least one compound which is suitable as a phase transfer catalyst and which can replace the anions or cations present in the emulsified water droplets by hydroxide ions or protons and which can thereby cause precipitation of the oxide in the droplets.

2. The process of claim 1 wherein an emulsifier, preferably a non-ionic emulsifier, is employed for forming the emulsion.

3. The process of one of claims 1 and 2 wherein the oxide (hydrate) to be precipitated is-a neutral or basic oxide and the compound which is suitable as a phase transfer catalyst introduces hydroxide ions into the aqueous phase.

4. The process of one of claims 1 and 2 wherein the element to be precipitated as an oxide (hydrate) is at least one from the group consisting of the alkaline earth metals, in particular barium, of the lanthanides, in particular yttrium, of the sub-group metals, in particular titanium, zirconium, niobium, tantalum and tungsten, and/or aluminum, silicon, tin and lead.

5. The process of one of claims 1 to 4 wherein an ammonium salt, in particular a tetraalkyl- or tetraaralkylammonium halide, is employed as the compound suitable as a phase transfer catalyst.

6. The process of one of claims 1 to 5 wherein an optionally halogenated aliphatic or aromatic hydrocarbon, or a mixture thereof, is employed as the organic liquid.

7. The process of one of claims 1 to 6 wherein the volumetric proportion of the aqueous phase in the emulsion is 15 to 45%.

8. The process of one of claims 1 to 7 wherein the aqueous phase is adjusted to an average droplet size in the range of from 0.1 to 5 $\mu$m before precipitation is started.

9. The process of one of claims 1 to 8 wherein a substoichiometric amount of the compound suitable as a phase transfer catalyst is employed, and this compound is regenerated continuously or batchwise.

10. The process of claim 9 wherein an ion exchanger is used for regenerating the compound suitable as a phase transfer catalyst.

11. The process of one of claims 9 and 10 wherein the precipitation of the oxide(hydrate) and the regeneration of the compound suitable as a phase transfer catalyst are carried out simultaneously.

12. The use of the suspension obtained by the process of one of claims 1 to 11 for the preparation of (ceramic) oxide powders and/or the manufacture of shaped articles, in particular ceramic articles.

**Revendications**

1. Procédé pour préparer une suspension contenant des particules d'oxyde sphériques, dans lequel on émulsionne une phase aqueuse contenant au moins un élément pouvant précipiter sous forme d'un oxyde ou d'un hydroxyde, sous forme dissoute ou sous forme d'un sol, dans un liquide organique, caractérisé en ce qu'on dissout dans ce liquide organique, avant, pendant ou après formation de l'émulsion, au moins un composé pouvant être utilisé code catalyseur de transfert de phase, qui peut remplacer les anions ou cations présents dans les gouttelettes d'eau émulsionnées par des ions hydroxyde ou des protons, et de ce fait peut provoquer la précipitation de l'oxyde dans les gouttelettes.

2. Procédé selon la revendication 1, caractérisé en ce qu'on utilise pour former l'émulsion un émulsionnant, de préférence un émulsionnant non ionique.

3. Procédé selon l'une des revendications 1 ou 2, caractérisé en ce que, pour ce qui est de l'oxyde ou de l'hydroxyde à précipiter, il s'agit d'un oxyde neutre ou basique, le composé pouvant être utilisé comme catalyseur de transfert de phase introduisant des ions hydroxyde dans la phase aqueuse.

4. Procédé selon l'une des revendications 1 ou 2, caractérisé en ce qu'il s'agit, pour ce qui est de l'élément destiné à précipiter sous forme d'un oxyde ou d'un hydroxyde, d'au moins un élément choisi parmi l'ensemble comprenant les métaux alcalino-terreux, notamment le baryum, les lanthanides, notamment l'yttrium, les métaux des groupes secondaires, notamment le titane, le zirconium, le niobium, le tantale et le tungstène, et/ou de l'aluminium, du silicium, de l'étain, et du plomb.

5. Procédé selon l'une des revendications 1 à 4, caractérisé en ce qu'on utilise comme composé pouvant être utilisé comme catalyseur de transfert de phase un sel d'ammonium, notamment un halogénure de tétraalkyl- ou de tétraaralkylammonium.

6. Procédé selon l'une des revendications 1 à 5, caractérisé en ce qu'on utilise comme liquide organique un hydrocarbure aliphatique ou aromatique, éventuellement halogéné, ou un de leurs mélanges.

7. Procédé selon l'une des revendications 1 à 6, caractérisé en ce que la fraction volumique de la phase aqueuse dans l'émulsion est de 5 à 45%.

8. Procédé selon l'une des revendications 1 à 7, caractérisé en ce que, avant le début de la précipitation, on ajuste la phase aqueuse à une grosseur moyenne des gouttelettes comprise entre 0,1 et 5 $\mu$m.

9. Procédé selon l'une des revendications 1 à 8, caractérisé en ce qu'on utilise une quantité inférieure à la quantité stoechiométrique du composé pouvant être utilisé comme catalyseur de transfert de phase, ce composé étant régénéré en continu ou d'une manière discontinue.

**10.** Procédé selon la revendication 9, caractérisé en ce qu'on utilise pour régénérer le composé pouvant être utilisé comme catalyseur de transfert de phase, un échangeur d'ions.

**11.** Procédé selon l'une des revendications 9 ou 10, caractérisé en ce qu'on met en oeuvre simultanément la précipitation de l'oxyde ou de l'hydroxyde et la régénération du composé pouvant être utilisé comme catalyseur de transfert de phase.

**12.** Utilisation de la suspension obtenue par le procédé selon l'une des revendications 1 à 11 pour fabriquer des poudres d'oxydes (céramiques) et/ou des objets moulés, notamment des objets céramiques.